# EUROPEAN PATENT SPECIFICATION

(11) **EP 4 283 759 B1**
(45) Date of publication and mention of the grant of the patent: **17.12.2025**
(21) Application number: 22883870.2
(22) Date of filing: 13.10.2022
(51) Int. Cl.: H01M 50/569, H01M 10/48, H01M 50/519, H01M 50/211, H01M 50/507, G01L 17/00, H01M 10/42

(54) **BATTERY MODULE HAVING SWELLING SENSING MEANS**
BATTERIEMODUL MIT QUELLUNGSERKENNUNGSMITTELN
MODULE DE BATTERIE AYANT DES MOYENS DE DÉTECTION DE GONFLEMENT

(30) Priority: 18.10.2021 KR 20210138260
(43) Date of publication of application: 29.11.2023
(73) Proprietor: LG Energy Solution, Ltd., Seoul 07335 (KR)
(72) Inventor: MIN, Kyoung Choon, Daejeon 34122 (KR)
(74) Representative: Plasseraud IP
(86) International application number: PCT/KR2022/015470
(87) International publication number: WO 2023/068647

(56) References cited:
- EP-A1- 3 893 319
- WO-A1-2006/118386
- JP-A- 2018 152 156
- KR-A- 20130 109 038
- KR-A- 20160 145 428
- KR-A- 20190 090 992
- KR-A- 20200 011 810

## Description

### [Technical Field]

This application claims the benefit of priority to Korean Patent Application No. 2021-0138260 filed on October 18, 2021.

The present invention relates to a battery module having a swelling sensing means capable of sensing swelling of a battery cell in an early stage.

### [Background Art]

With technological development of mobile devices, such as smartphones, laptop computers, and digital cameras, and an increase in demand therefor, research on secondary batteries, which are capable of being charged and discharged, has been actively conducted. In addition, secondary batteries, which are energy sources substituting for fossil fuels causing air pollution, have been applied to an electric vehicle (EV), a hybrid electric vehicle (HEV), a plug-in hybrid electric vehicle (P-HEV), and an energy storage system (ESS).

There are a lithium ion battery, a lithium polymer battery, a nickel cadmium battery, a nickel hydride battery, battery, a nickel cadmium battery, a nickel hydride battery, and a nickel zinc battery as secondary batteries that are widely used at present. The operating voltage of a unit secondary battery cell, i.e. a unit battery cell, is about 2.0V to 5.0V. When output voltage higher than the above operating voltage is required, therefore, a plurality of battery cells may be connected to each other in series to constitute a cell module assembly. In addition, cell module assemblies may be connected to each other in series or in parallel to constitute a battery module depending on required output voltage or charge and discharge capacities. In general, a battery pack is manufactured using at least one battery module by adding an additional component.

When a problem, such as overcharging, overheating, impact, or short circuit, occurs in the battery cell, a swelling phenomenon, in which gas is generated in the battery cell and thus the battery cell swells, may occur.

In general, such a swelling phenomenon occurs before fire outbreak or explosion of the battery cell.

For this reason, various methods of sensing the swelling phenomenon in order to sense a possibility of fire outbreak or explosion of the battery cell in advance before fire outbreak or explosion of the battery cell have been devised.

Patent Document 1 relates to a battery pack 200, wherein battery cells 10 are received in a module case 50 in the state in which the battery cells are stacked, and a horizontality sensor 70 configured to sense twisting of a wall of the module case 50 is provided.

The horizontality sensor 70 may sense twisting of the module case 50 due to surfaces of an expanded battery cell 10 when the battery cell 10 swells, and a controller 80 transmits a signal to an injection device 62 so as to inject a fire-extinguishing agent 60 based thereon, whereby the fire-extinguishing agent is discharged.

For a battery pack/module having no module case capable of sensing horizontality between battery cells in order to increase energy density or having battery cells densely stacked without an empty space therebetween, unlike the battery pack of Patent Document 1, however, it is difficult to sense swelling using the horizontality sensor.

In particular, for a battery pack or battery module including battery cells densely stacked without an empty space therebetween, even when gas is generated in a specific battery cell, surfaces thereof disposed in tight contact with battery cells adjacent thereto do not easily expand due to pressure. Rather, a phenomenon in which a sealed portion of the battery cell, from which an electrode lead protrudes, swells first occurs.

Therefore, there is a need for a sensing means capable of using such a phenomenon in order to sense swelling of a battery pack or a battery module configured such that surfaces of battery cells are disposed in tight contact with each other in an early stage.

### (Prior Art Document)

(Patent Document 1) Korean Patent Application Publication No. 2017-0061582

### [Disclosure]

### [Technical Problem]

The present invention has been made in view of the above problems, and it is an object of the present invention to provide a battery module including a swelling sensing means having a sensing pocket provided in a space between a battery cell and an ICB, whereby it is possible to sense swelling in an early stage.

### [Technical Solution]

A battery module according to the present invention to accomplish the above object includes a plurality of battery cells, each battery cell having an electrode lead, a module case configured to receive the plurality of battery cells, an interconnect board (ICB) assembly having a busbar electrically connected to the electrode leads of the plurality of battery cells, and a swelling sensing means configured to sense swelling of the plurality of battery cells.

Also, in the battery module according to the present invention, the plurality of battery cells are pouch-shaped battery cells.

Also, in the battery module according to the present invention, gas or liquid is injected into the swelling sensing means.

Also, in the battery module according to the present invention, the swelling sensing means may include a plurality of sensing pockets, a connection portion configured to connect the plurality of sensing pockets to each other, and an injection portion configured to allow injection of the gas or liquid into the swelling sensing means.

Also, in the battery module according to the present invention, the plurality of sensing pockets may be located in spaces between the ICB assembly and the plurality of battery cells.

Also, in the battery module according to the present invention, the plurality of sensing pockets, the connection portion, and the injection portion may be integrally formed.

Also, in the battery module according to the present invention, the swelling sensing means may be made of an elastic polymer material.

Also, in the battery module according to the present invention, the polymer material may be any one selected from among natural rubber (NR), butadiene rubber (BR), styrene butadiene rubber (SBR), acrylonitrile butadiene rubber (NBR), hydrogenated nitrile butadiene rubber (H-NBR), chloroprene rubber (CR), ethylene propylene rubber (EPDM), isobutylene isoprene rubber (IIR), acrylic rubber (ANM/ACM), silicone rubber, fluoro rubber (FKM/FPM), and urethane rubber (AU/EU).

Also, in the battery module according to the present invention, the swelling sensing means monitors change in internal pressure of the swelling sensing means to sense swelling of the battery cell.

In addition, a battery pack according to the present invention includes the battery module according to the present invention.

In addition, a device according to the present invention includes the battery pack according to the present invention.

### [Advantageous Effects]

A battery module according to the present invention has an advantage in that a swelling sensing means is provided, whereby it is possible to sensing a swelling phenomenon even when battery cells are stacked in tight contact with each other in an early stage.

In addition, the battery module according to the present invention has an advantage in that a swelling phenomenon is sensed in an early stage and response thereto is performed, whereby it is possible to inhibit fire outbreak or explosion of the battery cell.

### [Description of Drawings]

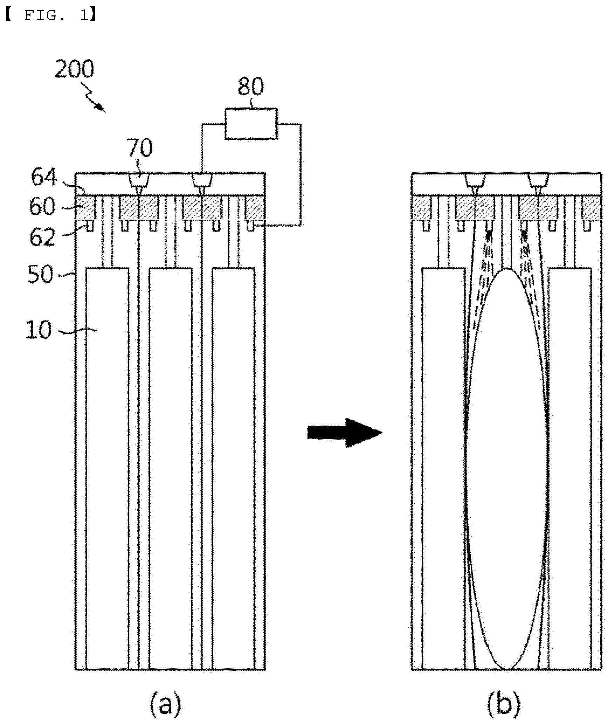

FIG. 1 is a sectional view schematically showing the structure of a conventional battery pack.
FIG. 2 is a sectional view schematically showing a battery module before a swelling sensing means according to an embodiment of the present invention is provided.
FIG. 3 is a sectional view schematically showing a battery module provided with a swelling sensing means according to an embodiment of the present invention.
FIG. 4 is a sectional view schematically showing the swelling sensing means according to the embodiment of the present invention.
FIG. 5 is a sectional view schematically showing a battery module including a battery cell having a swelling phenomenon occurring therein according to an embodiment of the present invention.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery module according to the present invention will be described with reference to the accompanying drawings.

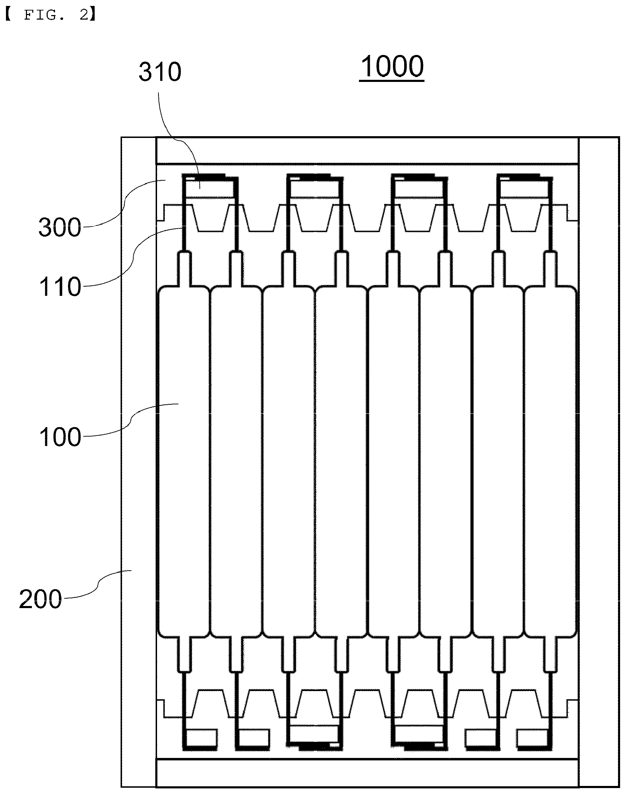

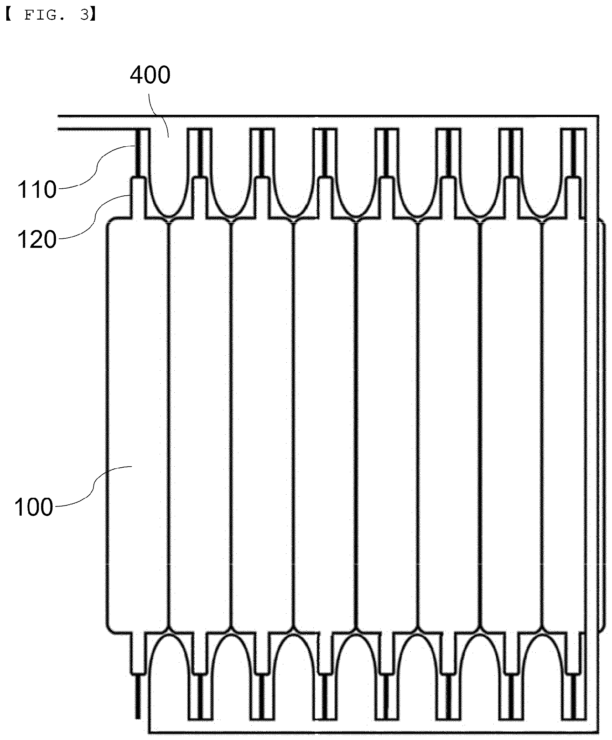

FIG. 2 is a sectional view schematically showing a battery module before a swelling sensing means according to an embodiment of the present invention is provided, and FIG. 3 is a sectional view schematically showing a battery module provided with a swelling sensing means according to an embodiment of the present invention.

When describing the battery module 1000 of the present invention with reference to FIGs. 2 and 3, the battery module 1000 includes a plurality of stacked battery cells 100, a module case 200, an ICB assembly 300, and a swelling sensing means 400.

First, the battery cell 100 may be classified as a cylindrical battery cell, a prismatic battery cell, or a pouch-shaped battery cell depending on the shape of a case. The battery cell 100 of the present invention is a pouch-shaped battery cell 100.

The pouch-shaped battery cell 100 generally means a battery cell 100 configured such that a battery case configured to receive an electrode assembly is a pouch case.

Here, the pouch case is generally configured to have a laminate sheet structure including an inner layer, a metal layer, and an outer layer. The inner layer is disposed in direct contact with the electrode assembly, and therefore the inner layer must exhibit high insulation properties and high resistance to an electrolytic solution. In addition, the inner layer must exhibit high sealability in order to hermetically seal the pouch case from the outside, i.e. a thermally-bonded sealed portion between inner layers must exhibit excellent thermal bonding strength.

The inner layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability; however, the present invention is not limited thereto.

The metal layer, which is disposed so as to abut the inner layer, corresponds to a barrier layer configured to prevent moisture or various kinds of gas from permeating into the battery from the outside. An aluminum thin film, which is lightweight and easily shapeable, may be used as a preferred material for the metal layer.

The outer layer is provided on the other surface of the metal layer. The outer layer may be made of a heat-resistant polymer that exhibits excellent tensile strength, resistance to moisture permeation, and resistance to air transmission such that the outer layer exhibits high heat resistance and chemical resistance while protecting the electrode assembly. As an example, the outer layer may be made of nylon or polyethylene terephthalate; however, the present invention is not limited thereto.

In addition, the battery cell 100 is generally configured such that electrode leads 110, i.e. positive and negative electrode leads, protrude/extend out of the pouch case, and the electrode leads 110 may protrude such that the positive and negative electrode leads protrude in the same direction or such that the positive and negative electrode leads protrude in different directions.

The pouch-shaped battery cell 100 is manufactured through a process of receiving the electrode assembly in the pouch case, injecting an electrolytic solution into the pouch case, and hermetically sealing the pouch case. In the pouch-shaped battery cell 100, a sealed portion 120 is formed at three or four edges of the pouch case, including edges from which the electrode leads 110 protrude.

The module case 200 is configured to receive the plurality of battery cells 100 and to protect the battery cells from external impact, and any of various known module cases 200 may be used.

Next, the interconnect board (ICB) assembly 300 is generally provided with a busbar 310 and is configured to electrically connect the electrode leads 110 of the battery cells 100 and the busbar 310 to each other.

In addition, the ICB assembly performs a function of transmitting various electrical signals corresponding to temperature or voltage of the battery cells 100 to a battery management system (BMS) during charging and discharging of the battery cells.

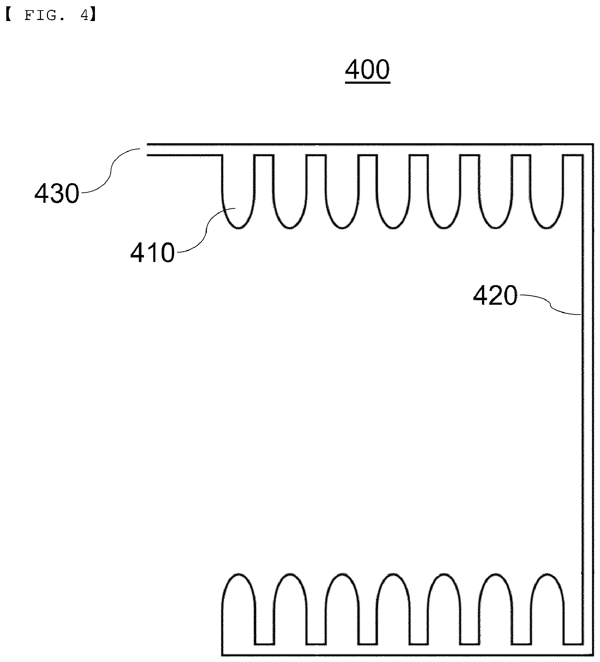

FIG. 4 is a sectional view schematically showing the swelling sensing means according to the present invention.

When describing the swelling sensing means 400 of the present invention with reference to FIGs. 2 to 4, the swelling sensing means 400 includes a sensing pocket 410, a connection portion 420, and an injection portion 430.

After being mounted in the battery module 1000, gas or liquid is injected into the swelling sensing means 400.

The sensing pocket 410 is located in a space between one battery cell 100 and another battery cell 100 adjacent thereto, specifically an empty space between an electrode lead 110 of one battery cell 100 and a sealed portion 120 that wraps the electrode lead 110 and an electrode lead 110 of another battery cell 100 adjacent thereto and a sealed portion 120 that wraps the electrode lead 110, and a plurality of sensing pockets 410 are provided depending on the number of stacked battery cells 100.

When viewing from another angle, the sensing pocket 410 is located in a space between the ICB assembly 300 of FIG. 2, which is omitted from FIG. 3, and the battery cells 100.

The connection portion 420 connects the plurality of sensing pockets 410 to each other and is used as a passageway, through which gas or liquid is injected into the sensing pockets 410.

Next, the injection portion 430 serves as an inlet, through which gas or liquid is injected into the sensing pockets 410 and the connection portion 420. The injection portion is located outside the module case 200 and allows gas or liquid to be injected from the outside after the swelling sensing means 400 is mounted and the battery module 1000 is formed.

In addition, the injection portion 430 is connected to a sensor configured to monitor change in internal pressure of the swelling sensing means 400.

It is preferable for the sensing pockets 410, the connection portion 420, and the injection portion 430 to be integrally formed such that gas or liquid is injected thereinto. In addition, it is preferable for each of the sensing pockets, the connection portion, and the injection portion to be made of an elastic polymer material in order to well sense pressurization of the battery cell 100 that expands as the result of swelling.

In particular, any one selected from among natural rubber (NR), butadiene rubber (BR), styrene butadiene rubber (SBR), acrylonitrile butadiene rubber (NBR), hydrogenated nitrile butadiene rubber (H-NBR), chloroprene rubber (CR), ethylene propylene rubber (EPDM), isobutylene isoprene rubber (IIR), acrylic rubber (ANM/ACM), silicone rubber, fluoro rubber (FKM/FPM), and urethane rubber (AU/EU) or a composite material including two or more thereof may be used as the polymer material.

The swelling sensing means 400 may be integrally formed by molding the above polymer materials using various molding methods.

Various known kinds of gas or liquid capable of sensing the battery cell 100 that expands by swelling may be used as the gas or the liquid injected into the swelling sensing means 400.

For example, air or water is a fluid that can be easily obtained and used inexpensively. A fire-extinguishing liquid may be injected into the swelling sensing means 400 such that the swelling sensing means can extinguish fire using the gas or liquid therein when fire breaks out in addition to sensing swelling.

It is possible to inhibit spread of fire to another battery cell 100 adjacent to a battery in which the fire breaks out by injecting the fire-extinguishing liquid, as described above.

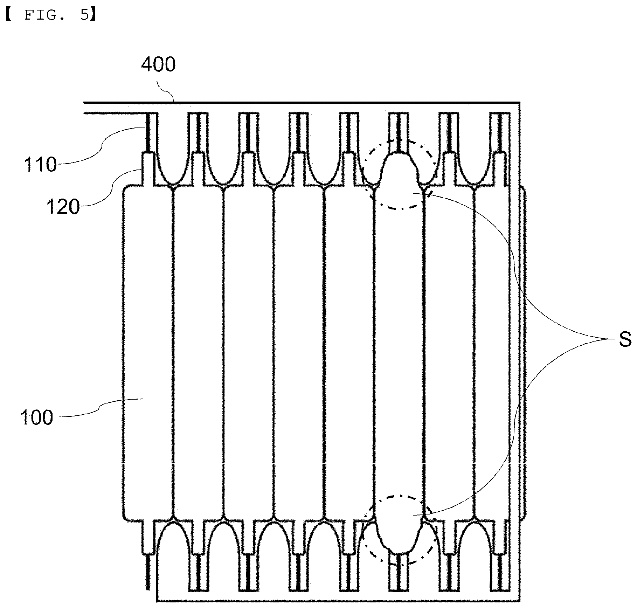

FIG. 5 is a sectional view schematically showing a battery module including a battery cell having a swelling phenomenon occurring therein according to an embodiment of the present invention.

A process of sensing swelling in the battery module 1000 including the swelling sensing means 400 will be described with reference to FIG. 5. First, when a specific 120 of the battery cell from which an electrode lead 110 protrude swells (S) earlier than a surface of the battery cell disposed in tight contact with another battery cell 100 adjacent thereto.

The sensing pocket 410 of the swelling sensing means 400 located between electrode leads 110 is pressurized by swelling of the sealed portion 120, whereby gas or liquid in the sensing pocket moves. The movement of the gas or the liquid is sensed by the sensor connected to the injection portion 430, whereby it is possible to sense that swelling occurs in the battery module.

Consequently, follow-up measures, such as interruption of operation of the battery module 1000 and removal of the battery cell 100 in which swelling has occurred, may be rapidly performed.

In addition, the battery module 1000 of the present invention may be manufactured in the state in which the swelling sensing means 400, which is integrally formed, is mounted in an empty space thereof in advance, compared to a process of manufacturing a conventional battery module 1000. Consequently, most of the design or production processes of the conventional battery module 1000 may be shared, and therefore it is possible to maximally inhibit an increase in manufacturing cost.

In addition, one or more battery modules 1000 of the present invention may be included and various devices, such as a BMS, may be added to manufacture a battery pack, and the battery pack or the battery module 1000 may be used as a power supply for various kinds of devices.

### (Description of Reference Numerals)

1000: Battery module
100: Battery cell
110: Electrode lead
120: Sealed portion
200: Module case
300: ICB assembly
310: Busbar
400: Swelling sensing means
410: Sensing pocket
420: Connection portion
430: Injection portion

## Claims

1. A battery module (1000) comprising:
a plurality of battery cells (100), each battery cell (100) having an electrode lead (110);
a module case (200) configured to receive the plurality of battery cells;
an interconnect board (ICB) assembly (300) having a busbar (310) electrically connected to the electrode leads of the plurality of battery cells; and
a swelling sensing means (400) configured to sense swelling of the plurality of battery cells,
wherein the plurality of battery cells are pouch-shaped battery cells,
wherein the swelling sensing means (400) comprises:
a plurality of sensing pockets (410);
a connection portion (420) configured to connect the plurality of sensing pockets to each other; and
an injection portion (430) configured to allow injection of a gas or liquid into the swelling sensing means, wherein the injection portion (430) is connected to a sensor configured to monitor change in internal pressure of the swelling sensing means (400).

2. The battery module according to claim 1, wherein the plurality of sensing pockets (410) is located in spaces between the ICB assembly (310) and the plurality of battery cells (100).

3. The battery module according to claim 1, wherein the plurality of sensing pockets (410), the connection portion (420), and the injection portion (430) are integrally formed.

4. The battery module according to claim 1, wherein the swelling sensing means (400) is made of an elastic polymer material.

5. The battery module according to claim 4, wherein the polymer material is any one selected from among natural rubber (NR), butadiene rubber (BR), styrene butadiene rubber (SBR), acrylonitrile butadiene rubber (NBR), hydrogenated nitrile butadiene rubber (H-NBR), chloroprene rubber (CR), ethylene propylene rubber (EPDM), isobutylene isoprene rubber (IIR), acrylic rubber (ANM/ACM), silicone rubber, fluoro rubber (FKM/FPM), and urethane rubber (AU/EU).

6. The battery module according to claim 1, wherein the swelling sensing means (400) are configured to monitor change in internal pressure of the swelling sensing means to sense swelling of the battery cell.

7. A battery pack comprising the battery module according to any one of claims 1 to 6.

8. A device comprising the battery pack according to claim 7.

## Patentansprüche

1. Batteriemodul (1000), umfassend:
eine Mehrzahl von Batteriezellen (100), wobei jede Batteriezelle (100) eine Elektrodenleitung (110) aufweist;
ein Modulgehäuse (200), welches dazu eingerichtet ist, die Mehrzahl von Batteriezellen aufzunehmen;
eine Verbindungsleiterplatten- (ICB) Anordnung (300), welche eine Sammelschiene (310) aufweist, die elektrisch mit den Elektrodenleitungen der Mehrzahl von Batteriezellen verbunden ist; und
ein Schwellungserfassungsmittel (400), welches dazu eingerichtet ist, ein Anschwellen der Mehrzahl von Batteriezellen zu erfassen,
wobei die Mehrzahl von Batteriezellen beutelförmige Batteriezellen sind,
wobei das Schwellungserfassungsmittel (400) umfasst:
eine Mehrzahl von Erfassungstaschen (410);
einen Verbindungsabschnitt (420), welcher dazu eingerichtet ist, die Mehrzahl von Erfassungstaschen miteinander zu verbinden; und
einen Injektionsabschnitt (430), welcher dazu eingerichtet ist, eine Injektion eines Gases oder einer Flüssigkeit in das Schwellungserfassungsmittel zu ermöglichen, wobei der Injektionsabschnitt (430) mit einem Sensor verbunden ist, welcher dazu eigerichtet ist, eine Änderung eines Innendrucks des Schwellungserfassungsmittels (400) zu überwachen.

2. Batteriemodul nach Anspruch 1, wobei die Mehrzahl von Erfassungstaschen (410) in Räumen zwischen der ICB-Anordnung (310) und der Mehrzahl von Batteriezellen (100) angeordnet ist.

3. Batteriemodul nach Anspruch 1, wobei die Mehrzahl von Erfassungstaschen (410), der Verbindungsabschnitt (420) und der Injektionsabschnitt (430) integral gebildet sind.

4. Batteriemodul nach Anspruch 1, wobei das Schwellungserfassungsmittel (400) aus einem elastischen Polymermaterial hergestellt ist.

5. Batteriemodul nach Anspruch 4, wobei das Polymermaterial jegliches ist, ausgewählt aus Naturkautschuk (NR), Butadienkautschuk (BR), Styrol-Butadien-Kautschuk (SBR), Acrylnitril-Butadien-Kautschuk (NBR), hydriertem Nitril-Butadien-Kautschuk (H-NBR), Chloroprenkautschuk (CR), Ethylen-Propylen-Kautschuk (EPDM), Isobutylen-Isopren-Kautschuk (IIR), Acrylkautschuk (ANM/ACM), Silikonkautschuk, Fluorkautschuk (FKM/FPM) und Urethankautschuk (AU/EU).

6. Batteriemodul nach Anspruch 1, wobei das Schwellungserfassungsmittel (400) dazu eingerichtet ist, eine Änderung eines Innendrucks des Schwellungserfassungsmittels zu überwachen, um ein Anschwellen der Batteriezelle zu erfassen.

7. Batteriepack, umfassend das Batteriemodul nach einem der Ansprüche 1 bis 6.

8. Vorrichtung, umfassend den Batteriepack nach Anspruch 7.

## Revendications

1. Module de batterie (1000) comprenant :
une pluralité d'éléments de batterie (100), chaque élément de batterie (100) présentant un fil d'électrode (110) ;
un boîtier (200) de module configuré pour recevoir la pluralité d'éléments de batterie ;
un ensemble carte d'interconnexion (ICB) (300) présentant une bus-barre (310) connectée électriquement aux fils d'électrode de la pluralité d'éléments de batterie ; et
un moyen de détection de gonflement (400) configuré pour détecter le gonflement de la pluralité d'éléments de batterie,
dans lequel la pluralité d'éléments de batterie sont des éléments de batterie en forme de poche,
dans lequel le moyen de détection de gonflement (400) comprend :
une pluralité de poches de détection (410) ;
une partie de connexion (420) configurée pour connecter la pluralité de poches de détection entre elles ; et
une partie d'injection (430) configurée pour permettre l'injection d'un gaz ou d'un liquide dans le moyen de détection de gonflement, dans lequel la partie d'injection (430) est connectée à un capteur configuré pour surveiller une variation de pression interne du moyen de détection de gonflement (400).

2. Module de batterie selon la revendication 1, dans lequel la pluralité de poches de détection (410) sont situées dans des espaces entre l'ensemble ICB (310) et la pluralité d'éléments de batterie (100).

3. Module de batterie selon la revendication 1, dans lequel la pluralité de poches de détection (410), la partie de connexion (420) et la partie d'injection (430) sont formées d'un seul bloc.

4. Module de batterie selon la revendication 1, dans lequel le moyen de détection de gonflement (400) est en matériau polymère élastique.

5. Module de batterie selon la revendication 4, dans lequel le matériau polymère est l'un quelconque sélectionné parmi le caoutchouc naturel (NR), le caoutchouc butadiène (BR), le caoutchouc styrène-butadiène (SBR), le caoutchouc acrylonitrile-butadiène (NBR), le caoutchouc nitrile-butadiène hydrogéné (H-NBR), le caoutchouc de chloroprène (CR), le caoutchouc éthylène-propylène (EPDM), le caoutchouc butyle (IIR), le caoutchouc acrylique (ANM/ACM), le caoutchouc silicone, le caoutchouc fluoré (FKM/FPM) et le caoutchouc uréthane (AU/UE).

6. Module de batterie selon la revendication 1, dans lequel les moyens de détection de gonflement (400) sont configurés pour surveiller une variation de pression interne des moyens de détection de gonflement afin de détecter le gonflement de l'élément de batterie.

7. Bloc-batterie comprenant le module de batterie selon l'une quelconque des revendications 1 à 6.

8. Dispositif comprenant le bloc-batterie selon la revendication 7.
